# EUROPEAN PATENT SPECIFICATION

(11) **EP 2 231 373 B1**
(45) Date of publication and mention of the grant of the patent: **08.07.2015**
(21) Application number: 08863613.9
(22) Date of filing: 07.11.2008
(51) Int. Cl.: B29B 11/14, B29B 11/08, B29C 49/06, B29C 49/22, B29C 49/64

(54) **PREFORM AND CONTAINER FOR CONTAMINABLE PRODUCTS AND METHOD FOR THE MANUFACTURING THEREOF**
VORFORMLING UND BEHÄLTER FÜR KONTAMINIERBARE PRODUKTE SOWIE HERSTELLUNGSVERFAHREN
ÉBAUCHE ET CONTENEUR POUR PRODUITS CONTAMINABLES ET PROCÉDÉ POUR LEURS FABRICATIONS

(30) Priority: 09.11.2007 BE 200700545
(43) Date of publication of application: 29.09.2010
(73) Proprietor: Resilux, 9230 Wetteren (BE)
(72) Inventor: DIERICKX, William, B-9070 Destelbergen (BE)
(74) Representative: Petsis, Christos
(86) International application number: PCT/BE2008/000092
(87) International publication number: WO 2009/079724

(56) References cited:
- EP-A2- 0 928 683
- WO-A-95/16554
- WO-A2-2006/099700
- US-A- 5 250 333
- US-A1- 2003 001 311

## Description

### Field of the invention

The present invention relates to containers for containing products that are contaminable, essentially of the food industry, more particularly milk and further dairy products, including nutrients and dairy products that are enriched or contain fruit.

The present invention also relates to a preform, serving as a semi-finished product, for making such containers, consisting of at least one base layer made of a primary plastic material, with a certain amount of additives incorporated in it.

### Background of the invention

Plastic containers including bottles made of polyesters and notably polyethylene terephthalate (PET) are increasingly employed for packaging food and drinks. PET containers were originally used for carbonated beverages, such as soda water. They have since gained considerable ground in all areas of the food sector, such as drinks, including milk.

One problem that will emerge here is that today PET bottles can not be asepticized above 60 °C with existing installations for filling polyethylene bottles. In contrast, however, this is needed in linear aseptic filling machines where about 80 °C applies for the sterilization of the bottles to be filled. This would allow an attractive transition of PE bottles to PET bottles, which would present a number of advantages.

An additional problem lies in the compelling need to provide a satisfactory thermal stability of the PET container. In contrast, in the existing state of the art, containers are mostly used that are manufactured from preforms which comprise a so-called black intermediate layer, where the blowing up until containers of these preforms involves many difficulties since the black intermediate layer picks up a large amount of infrared radiations. This is due to its high heat conduction so that the associated local heating is too large at the blowing operation.

### Prior Art

That problem has arisen in response to the finding that the existing market of polyethylene bottles suffers big losses. When asepticizing the bottles to be filled, one usually works at higher temperatures. With polyethylene bottles this happens without problem, in contrast with PET, whose soft temperature is around 70 °C. In contrast, however, the extrusion equipment used for polyethylene needs cuttings in the neck with formation of an indentation on the edge of the opening zone where an appropriate seal is affixed. This implies the need of additional appropriate seals as seal-waves or foils in order to seal completely the opening side of the containers where it has been cut off at the asepticizing process. All this hinders somewhat the pour out, respectively drink out from such containers. Designing of the neck for pure polyethylene bottles makes it necessary to cut, with an associated need for a seal. This problem does not occur with synthetic materials such as PET.

In light of the foregoing and the attractive behaviour of PET, a remedy was sought with this material. Existing fillers, which originally were intended for the filling of polyethylene bottles at higher temperatures, appear however not useful for the filling of ordinary PET bottles. The operating temperatures are too high for filling of PET bottles instead of polyethylene. This made the filling of ordinary PET bottles impossible since of the melting temperature of PET which is lower than the normal operating temperature in asepticizing of PE bottles. If existing linear aseptic filling machines have to be used for the filling of PET bottles higher temperatures must be accepted for the sterilization of the bottles since otherwise these installations are not suitable for the filling of ordinary PET bottles which can not resist these sterilisation conditions, in particular temperature.

WO 2007/128085 describes a preform, serving as a semi-finished product, for a container intended for containing products therein that are sensitive to radiation in particular light sensitive and food and dairy products, consisting of at least one base layer made of a primary plastic base material, with a certain amount of additives incorporated in it. The preform is opaque over virtually the whole extent thereof, wherein a relatively low percentage of plastic additives is incorporated to generate said opaque appearance, so as to protect the inner space thereof which is delimited by it against external radiation particularly electromagnetic radiation, more particularly light, under normal pressure condition.

Nearest prior art WO 95/16554 describes a multi-layer preform and a container using polyethylene naphtalate (PEN) or a blend of PEN and polyethylene terephtalate (PET) as the polymeric material for the outer container layers. For the inner layer, a non-crystallizable polyester or substantially non strain-hardenable polyester is described. The second material herein is a material that is essential for the production of the container.

US 2003/000131 discloses a multilayer injection molded plastic container using a sleeve molding technology. An inner sleeve which comprises a neck finish from a thermal resistant material such as PEN is used to increase the container heat resistance.

EP 0928683 discloses a multilayer laminate consisting of a high temperature thermoplastic polyester and of a low temperature thermoplastic polyester, whereas the low temperature layer contains at least one crystallisation rate inhibitor to prevent substantial haze during processing the laminate at the higher temperatures required for the high temperature layer.

WO 2006/099700 discloses a multilayer container composed of a primary, a secondary and a tertiary materials, where the tertiary material is a fluid.

### Aim of the invention

The main objective of this invention is to provide such bottles in order to make sterile filling in moderate temperatures, particularly between 75 and 85 °C, thus increasing the thermal properties of the bottles which are such that the thermal shrinkage of the bottles thereof does not exceed a predetermined value at a predetermined operating temperature.

So-called aseptic lines are very expensive so that the design of new filling systems specially adapted to the requirements of PET is not an option. This invention has therefore the objective to propose a solution to the above problem. This involves the provision of suitable special additives in terms of both quantity and type, which are to be included in the primary basis material for the achievement of appropriate so-called blends.

### Summary of the invention

Thus according to the invention a method for manufacturing a container is described, this method comprising the steps of making a blend of a plastic material with additives incorporated in it ; injection moulding of a preform comprising at least one layer made of said blend ; followed by blowing said preform into a container, wherein said additives are made of a material having a higher glass temperature T_{g} than said plastic material, thus yielding an increased temperature value T_{g}, characterised in that it further comprises the steps of:
- adding a nucleator or grain former to said plastic material,
- forming a crystal herein and
- nuclearising said preform by said latter adding.

Thanks to the inclusion of an appropriate additive in the primary raw material, the temperature issue is eliminated so that the filling of bottles made of this material blend can be done with existing installations. The significant advantage is that the existing linear aseptic filling lines can also be used even for the filling of mixed bottles, and this without major transformation costs, which otherwise would have been necessary to be able to achieve asepticizing at lower temperatures.

Thus according to the invention, there is provided a method which is remarkable in it uses primarily a plastic material with a certain percentage of additives, for the fabrication of a container, such as bottle, which has the required thermal stability. At the same time, the products contained herein can be reliably protected against external radiation, particularly electromagnetic radiation, more particularly light, both artificial and natural, visible radiation and UV radiation.

Furthermore according to the invention, two axes are proposed, namely by crystallization of the material whereby said glass temperature increases; and further by nucleation of basis material provided by the introduction of germs of crystallization whereby a primary raw crystal is formed, for example through talc or other forms of germ.

These techniques to increase the glass temperature Tg of a bottle, thus increasing its thermal properties, consist in crystallizing the polymer, by heating the preforms. By warming of the performs, crystallization of the polymer takes place, which can be promoted by using a nucleator such as talc, whereby the level of crystallization may be raised. This in itself known technique for heat resistance can thus also be applied to the milk preform.

The plastic material can be a material that can be biaxially stretched, like PET, or can be polypropylene. The additives can be polymer additives, in particular thermoplastic polymer additives, for example polycarbonate, PEN, PETN05, or another PET.

Advantageously, the primary material is injection moulded with addition of some percentage of additives in said blend, and said increased glass temperature value T_{g} is controlled, wherein the injected preform is blown into said container by blow moulding with said T_{g} value, wherein the refractive index of said primary plastic material is so affected that incident radiation is practically not refracted when hitting or impinging its wall, wherein the internal wall thereof is protected against external radiation, particularly electromagnetic radiation, particularly light.

Advantageously, the preform is heated up to a certain warming temperature, wherein a crystallization effect of the polymer is generated, consisting of an increased crystallization of said plastic material through the action of an appropriate agent.

Advantageously, the warming temperature is set between 70 and 90°C, preferably between 75 and 85°C. Alternatively, the warming temperature is increased to a target of at least 90°C, preferably up to 100°C.

Advantageously, the shrinkage value of said container is no more than 5%, preferably at most 3,5%, more preferably less than 1% when filled with water at a temperature of 86°C during five minutes.

Adequate thermal stability has become necessary to fill bottles, to sterilise and asepticize during the filling process. A further problem in the filling process according to the invention arises then also with the addition of a chemical cleaning agent for the aseptic line, for example peroxide, whereby a temperature range is created to around 75 to 85°C. Then the problem must be solved that the shrinkage of the bottle at that moment remains smaller than a certain threshold, up to max. 5%, but preferably to 3.5 to 4% or even approximately 1%. The problem is essentially the asepticizing or sterilization of the containers before filling.

Thanks to the invention one obtains improved, high thermal properties of the PET bottle, for a reduced shrink to 3.5 to 5% or even 1% at a temperature of 75 to 85°C, with polycarbonate blend as privileged embodiment. It could be established that the mixing of polycarbonate with the aforementioned PET material, permits to obtain a so-called blend or blend that offers the advantage of an excellent workability at higher temperatures.

Thus it is the intention to increase glass temperature of the used composition and in this respect to make an appropriate choice of the additives to get the appropriate influence on it, at a temperature of 75 to 85 °C. The aim is to be able to make a bottle with improved thermal properties where the glass temperature can be significantly increased, preferably to 90 ° C and even 100 ° C. The shrinkage will be limited to a maximum of 5% or preferably to 3.5 to 4%, perhaps even 1%.

Advantageously, the additives have a neutralizing action on external radiation and/or undesired gas formation, which originates from degradation of said product or liquids intended to fill said container to be produced from said preform, and/or on waste or degradation materials, which originate from said container itself, and/or on substances, and/or on reagents which have an adverse effect on a product to be contained, particularly wherein at least some of said additives are added consisting of dying substances.

The invention concerns also a preform for container manufactured by such a method, made of a blend of primary plastic material with a certain amount of additives incorporated in it, characterized in that the amount of said additives is between 1% and 20%, preferably between 5 and 15%, more preferably about 10 %, in weight and/or in that said plastic material is formed of a biaxially stretchable material, preferably PET or polypropylene.

A significant advantage in the replacement of polyethylene by biaxial stretchable basis material for containers to be filled consists in the elimination of the need to provide for a seal, thanks to the elimination of the cutting process necessitated by extruded polyethylene.

Advantageously, additives are formed of polymer, in particular thermoplastic polymer, more particularly in that the additives are comprised of polycarbonate, PEN, PETN05, polypropylene or PET, essentially or not, respectively.

Advantageously, the preform has a single layer structure. Alternatively, the preform has a multilayer structure, in particular a three layer structure, essentially composed of said plastic base material as a primary material further comprising an intermediate core layer, acting as a barrier layer, in particular as light and/or oxygen barrier, which is composed of a secondary plastic material for restricting residual transmitted light and/or oxygen.

Advantageously, the intermediate layer is white or coloured, wherein said intermediate layer is composed of a blend of said secondary plastic material with secondary additives according to a predetermined ratio, In particular of 1 to 50%, preferably 15 to 35% by weight, thereby representing not more than 10% of the total weight of the preform ; wherein said secondary plastic material is formed of a material that is biaxially stretchable, in particular PET, in particular wherein said additives have a neutralizing action on reagents with an adverse impact on the content, on the formation of gas originating from a degradation of said product, or on external substances, especially oxygen and/or carbon dioxide, thereby forming an active or passive barrier in the preform wall, more particularly wherein a gas barrier is included in one of the layers, in particular in said intermediate layer, thereby consisting of a barrier material with relevant gas absorption, wherein said intermediate layer acts as a gas barrier.

The Invention concerns the use of such a container as produced by such a method or from such a perform, remarkable in that said container contains products that are contaminable products in particular sensitive to radiation, more particularly light and/or oxygen sensitive nutrients such as food dairy products, more particularly milk.

In selecting the blend of compounds to be used for the composition that can qualify to the fulfilment of above conditions, the following should be taken into account. Providing input of another material as an additive, a greater glass temperature Tg can be achieved and the glass temperature of the complete product can be risen. The behaviour of the glass temperature is however not linear.

According to a preferred embodiment of the invention, the plastic material consists of PET. This material has indeed many advantages in the specific field of applications of this invention including a very large freedom in shaping the container, as well as a more reliable neck forming. This appropriate material is not cut and therefore no seal is needed since of its excellent formability.

A key advantage of the mixing of the standard PET base material to a blend with a polymer additive is that bottles essentially manufactured from PET can be filled on existing linear filling lines and this at virtually the same temperatures. These are the operating temperatures initially foreseen for the classical filling lines for polyethylene bottles which were usually used for the dairy sector, especially milk, since of the critical asepticizing parameters to which such milk bottles must be subjected due to the inherent instability of such foodstuffs.

Thanks to the inclusion of an appropriate additive in the PET base material, in particular polycarbonate, this temperature problem is eliminated so that the filling of bottles made of PET blend material can be done with existing installations. The significant advantage is that the existing linear aseptic filling lines can also be used even for the filling of mixed PET bottles, and this without major transformation costs, which otherwise would have been necessary to be able to achieve aseptising at lower temperatures which are applicable in the case of filling of pure PET bottles. This will then open the market for PET bottles or containers in the dairy sector, which in itself was not broad enough to be interesting for the filling sector, discouraged by the large transformation costs. This is also the defining feature that is peculiar to this container according to the invention.

Another significant advantage in the replacement of polyethylene by PET basis material for the containers to be filled consists in the elimination of the need to provide for a seal, thanks to the elimination of the cutting process used in polyethylene. The prime advantage of PET associated with its applied stretch process, its excellent formability, is thereby fully exploited.

The global filling process is therefore considerably simplified thanks to the elimination of that cutting process which was necessary in the hitherto prevailing method of application in polyethylene bottles which were intended for filling with milk and/or dairy products under high temperature conditions since of the sterilization of these bottles. Thus, these sterilisation temperatures are no longer too high for the use of PET bottles instead of Polyethylene bottles. Thanks to the invention work can be made directly in line, which is not always possible with polyethylene bottles.

According to a special embodiment of the invention, the additives are formed by polymer additives, preferably by thermoplastic polymer additives with higher glass temperature Tg and melting temperature Tm-values than the basis material, usually PET.

Polyethylene terephthalate is an excellent material for packaging pasteurized milk, which does not keep for long and is distributed and kept cold, with a shelf life of 7-10 days. However, the absence of a built-in light barrier extending across the whole container greatly hampers the use of all-PET plastic formulations for packaging sterilized, long-life ultra-high temperature (UHT) milk, which keeps for 4-6 months at a normal temperature.

One of the problems with milk and dairy products generally lies in their unstable nature. The fact is that they can be attacked by undesirable external effects forming part of the prevailing conditions of the surroundings. Their keeping properties therefore depend to a great extent on the way they are packed.

According to a further embodiment of the invention the additives are formed by a plastic material that is incompatible with the primary raw material formed by PET, whereby its refractive index is quite far from those of PET.

This results provides a double advantage, not only with improved thermal properties, but also with an opacity, thus protecting the contained product from the light and other radiations from the surroundings.

According to a privileged embodiment of the invention, said additive is formed by a polypropylene. This PP material has very good dispersion properties, in particular in PET, so that this material is best qualified for the later transformation of the preform into a container.

Immediately preforms are thus proposed whose function is also a half finished semi product that can be transformed directly to a container equipped with an efficient light barrier. In particular, the refractive index of such primary source material is so affected that the radiation is virtually not refracted. This allows the container to take drinks and food which are protected from harmful external light rays, in particular under normal operating conditions of pressure, against photo-oxidation and the subsequent degradation of light catalysed products. The surface of this container reflects an important part of the incident light naturally. In addition, the container wall presents a high level of internal refraction. Both aforementioned phenomena of reflection and refraction combine together to work significantly against the light passage, which is beneficial to photo sensible products such as UHT milk. Thus, UHT milk can reliably be stored in the long term, even at room temperature and in the presence of light, without the need of special storage or refrigeration in dark rooms. This gives a significant improvement compared to existing PET structures since it is particularly suited to normal operating conditions of temperature, which is particularly favourable to containers as packaging of UHT milk storage at room temperature. This will further permit that known white colour pigments which are more expensive, may be replaced by a low percentage of cheaper polymer additives, which is economically advantageous.

Furthermore opacity of the outer wall can be obtained by mixing with the aforementioned thermoplastic polymer additives with the PET according to a ratio of 1 to 10% by weight. The remarkable thing is that the aforementioned coloration to white is already obtained with a very low addition of additives, to levels ranging up to only 2%, which is much lower than known levels. With adding of higher percentages of polymer additives opposite problems arise with the structure, with a risk of delamination due to an incompatibility of the mixed materials. Preferably one will therefore work with percentages that will not exceed the critical threshold of 10 or even 8%, whereby satisfactory mechanical properties of the blend are maintained with the simultaneous acquisition of a satisfactory barrier effect. These additives are mixed In the PET at the height of 3 to 9%, which increases even more the aforementioned impact, and further in a range of 5 to 8% by weight. Thus, opaque PET containers are achieved whose wall colour and colour density, which is a measure for opacity, is obtained without the addition of white colour pigments.

A further benefit from the addition of polypropylene is that the so-called intrinsic viscosity of the processed preform material is improved in comparison with conventional mineral-filled PET. This parameter indicates the convenience to process the preform on a so-called stretch blow moulding installation on which the preform is blown to the final container. Opaque preforms with higher pigment loadings exhibit significantly lower levels of intrinsic viscosity than ordinary preforms, whereby these preforms do not have the required mould ability in the blowing process of the preform. As a result, it becomes harder to stretch the preform and blow it into a bottle with the desired properties, in particular on what concerns wall thickness distribution. The preforms with added polypropylene in replacing dyes have a high level of mould ability and intrinsic viscosity so that such preforms can much easier be processed on conventional stretch blow mould installations. The direct consequence is that containers with a much lower weight can be produced by the application of this polymer additives technology compared with containers manufactured with known high standard pigment loadings. Moreover, as the polypropylene density is 30% lower than the one of PET, the density of the PET material mixed with PP additives is also reduced and also the weight of the container is reduced. Thus the proposed containers, respectively preforms are much lighter.

Further a PET structure is known, which is formed by a single layer structure made from opaque white PET but with a relatively high white pigment loading with titanium dioxide or zinc sulphate. The disadvantage of this structure is that a relatively high load of pigments, ranging up to 8%, is required which has an adverse impact on the ease of injection moulding. There is another negative influence in the heating process of the preform for the blowing into containers. Even so protection from light is not satisfactory. Ultimately, there is an adverse impact on the cost.

A three layer structure for polyethylene containers is also known with a light barrier consisting of a layer of black polyethylene on both sides surrounded by a layer of white polyethylene. Further, a six layer structure is known formed by the superposition of a white polyethylene followed by a black polyethylene, then an adhesive, a so-called EVOH layer, another adhesive, and finally a black polyethylene as light and oxygen barrier structure. Still further, a three layer PET structure is also known consisting of a black PET layer between two adjacent white PET layers.

The drawback to these three known structures is that the white pigment loading in the outer layer should be relatively high to prevent that the black colour from the middle layer is partially visible. This would cause a grey discoloration on the surface of the bottle with a visible trace resulting in the outer layer, which is visible to the consumer. Coloration is totally undesirable. To prevent this, the containers must be with a white exterior layer made thick enough to cover the black layer and make it almost invisible. Such bottles are relatively heavy and are too expensive, whereby they will be difficult to blow, as the amount of white pigments must achieve relatively high levels ranging from 4 to 5% and more.

On what concerns the replacement of the black middle layer by a white one, the problem arose around the frequency of the incident light that still reflects it on and in the white intermediate layer without absorbing the incident light. This problem should be resolved after considering the contents of the bottle or container to fill. Up to now, in this case, a dye was chosen which was still able to absorb partially the energy of the incident light, even with a relatively low amount of pigments or dyes. The aim is that with the inclusion of polypropylene, a higher refractive index can be achieved with less than 3% pigments and so at least light can be absorbed. The foregoing solves the problem that a black, or even dark intermediate layer can not be hedged in a satisfactory manner with a colour, like red for example. This is usually caused by the unwanted shadow effect, which can cause significant discoloration to the desired opaque colour and so that the referred view is not obtained as a result. One thus could observe a satisfactory liability from the original colour can really only be obtained with inclusion of a white intermediate layer.

A remarkable result according to the invention is to obtain the result of an intermediate layer with a number of pigments that gives the final bottle an efficient light barrier with a satisfactory thermal stability, with a very slight pigmentation,. This is a great advantage indeed in terms of both weight and cost. Pigments are always very expensive. Although virtually all plastics can be loaded with pigments but not all the same extent, as PET compared with polypropylene. For existing products, there is a loss at the blowing stage, up to 50%, and this since of the pigment loading.

This invention further relates to a manufacturing process of containers, including Polyester containers by the injection moulding of preforms followed by blowing them to containers.

An immiscible composition is formed which is white in colour naturally, i.e. without pigments. This immiscibility is further used in the so-called preform orientation, particularly during the blowing of it into a container, since the material surface with a white aspect is transformed into a nacreous aspect, at least in the areas where the preform is stretched.

The transmittance results can be further improved by adding a small amount of dyes in the PET / PP blend, typically in the order of around 4% by weight until up to 2%, respectively max. 8% to 5% for a multilayer respectively single layer structured container. This produces results directly visible with the naked eye.

This invention relates also to a process for the manufacture of multilayer containers by the injection moulding of preforms with co-injection followed by blowing them to containers.

According to a special embodiment of the invention, said polymer addition is included in a multi-coloured structure with a PET intermediate layer. Herewith light transmission can be really restricted. Thus, the combination of this polymer mixing in a multilayer structure with a central coloured PET layer presents some effectiveness. Both the nacreous and metallic finishes may be coloured departing from a white base by adding PP-coloured pigments, or even if use of a multilayer structure with a coloured intermediate layer.

To summarize, multilayer bottles can be manufactured in an inexpensive way with a lower weight, thus a lower cost is achieved. A further advantage is that injection and blow process is equivalent to ordinary single layer PET, which is not possible with existing systems.

Thus, the lack of an appropriate light protection in the known packaging produces photo-oxidation of the packaged milk as a result. This produces the development of undesirable side tastes associated with light. The Riboflavin or vitamin B2, which is present in milk as well as other vitamins and nutrients, are also easily affected by photo degradation. It is known that degradation of milk is caused by exposure to light, visible or not, especially in the range of wavelengths between 200 and 550 nm. Consequently, milk must at all costs be protected against such harmful wavelengths for the sake of maintaining product quality throughout the preset conservation time of the milk.

For products that have additional oxygen sensitive nutrients, the passage of oxygen must as far as possible be obstructed to prevent quality loss. E.g. UHT milk packages were designed to prevent passage of visible light but also of UV radiation. Thus multilayer cartons packages were used yet with a full light barrier and a layer of aluminium foil to prevent oxygen introduction. However, with such packaging the preservation of the contents after the opening of the container is unsatisfactory owing to the closure.

Moreover, none of the aforementioned existing structures is capable of providing whatsoever an additional oxygen barrier, compared with conventional PET containers, at least in the packaging of light and oxygen sensitive products. Therefore, a still further advantage of the invention consists in that an oxygen barrier can be included in the container, respectively preform wall by replacing the PET of one or more layers by a polyester barrier with oxygen absorption.

Further features and properties of a preform, container and respectively method according to the invention are set out hereafter in the following description of some embodiments of the invention which are represented in the appended drawings.

### Brief description of the drawings

Fig. 1 is a schematic cross sectional view of a preform according to a first embodiment of the invention along its longitudinal axis.
Fig. 2 is a similar view as Fig. 1 of a second embodiment of a preform according to the invention.
Figs. 3 to 5 are each an oblique view of the top of an embodiment of a container according to the invention, respectively of the state of the art.
Figs. 6 and 7 are both an exploded view of a mixed detail representation showing a partial cross section along its longitudinal axis of the container and its closure cap according to Figs. 3 and 4 respectively.
Fig. 8 and 9 are both a front view of various embodiments of a container according to the invention.
Fig. 10 is an enlarged detailed view of a wall section of a container according to fig. 3.

### Description

In general, this invention relates to preforms and containers intended to contain contaminable products such as milk, dairy or fruit juices and so-called functional or vitaminized drinks or beverages containing nutrients. These containers have to be aseptisized before filling, and thus they need certain thermal properties, which standard PET bottles are missing.

It is to be understood that ordinary containers having a rigid or semi-rigid wall with a predetermined shape are meant here. These containers are intended for normal pressure conditions and are not subject to comply with special conditions such as high pressure conditions for example.

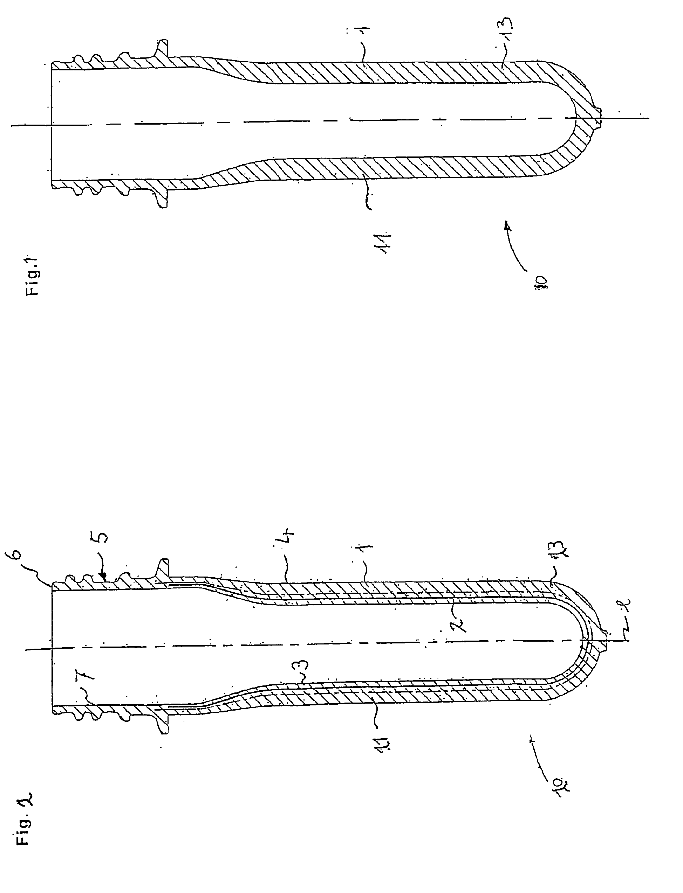

Fig. 1 shows a so-called mono-layer preform 10 made of a blend 13 of a plastic material 11 with additives 12 incorporated in it, with a wall 4 and a neck 5 in cross-section taken in accordance with the longitudinal axis ℓ.

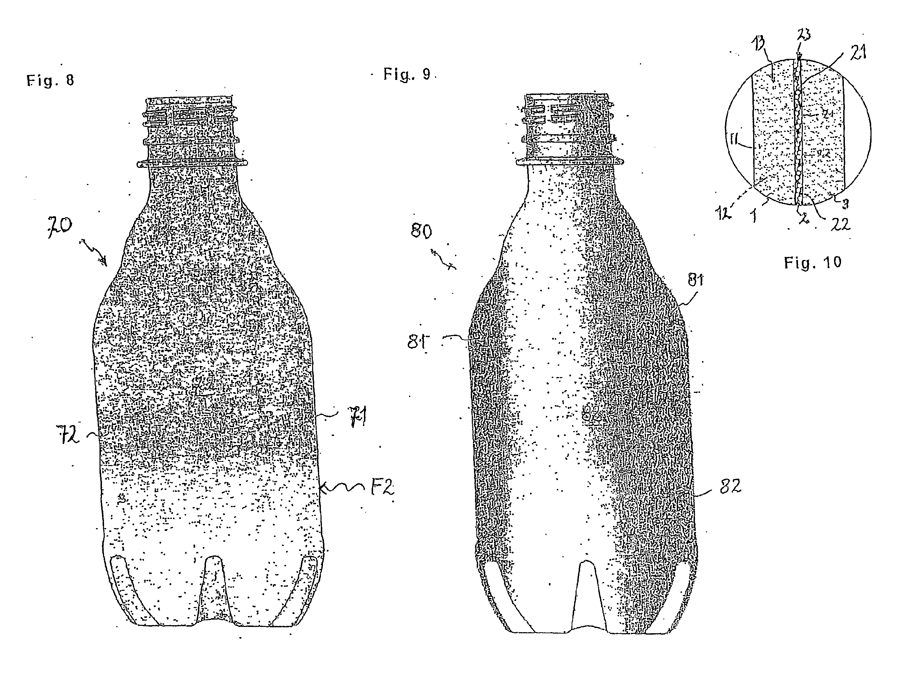

Fig. 2 shows a preform 20 with a three layer structure consisting of a base layer 1 wherein an intermediate core layer 2 is incorporated consisting of a secondary plastic material 21, and additives 22 to form a secondary blend 23, see fig. 10, with an externally oriented side 1 and an internal side 3. Advantageously the primary plastic material 11 is made of PET, optionally also the secondary plastic material 21.

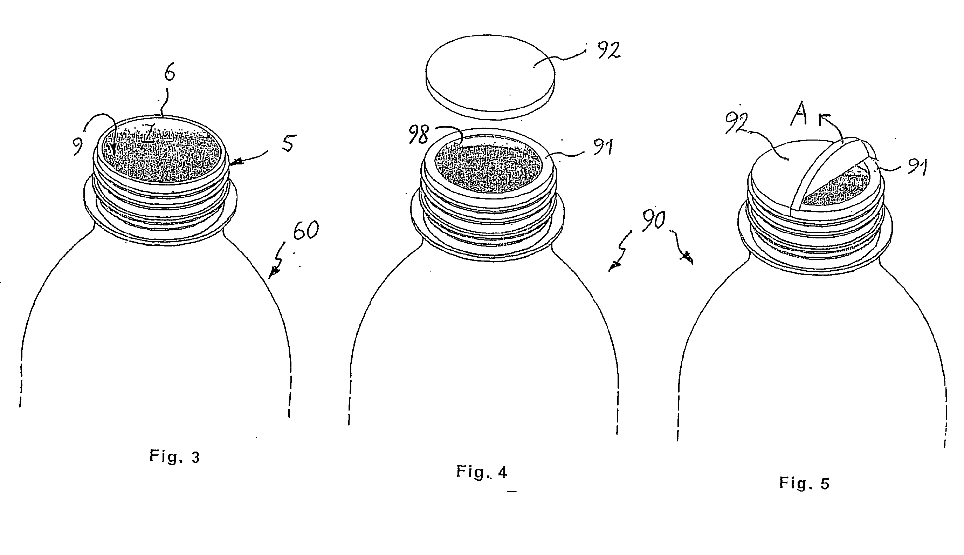

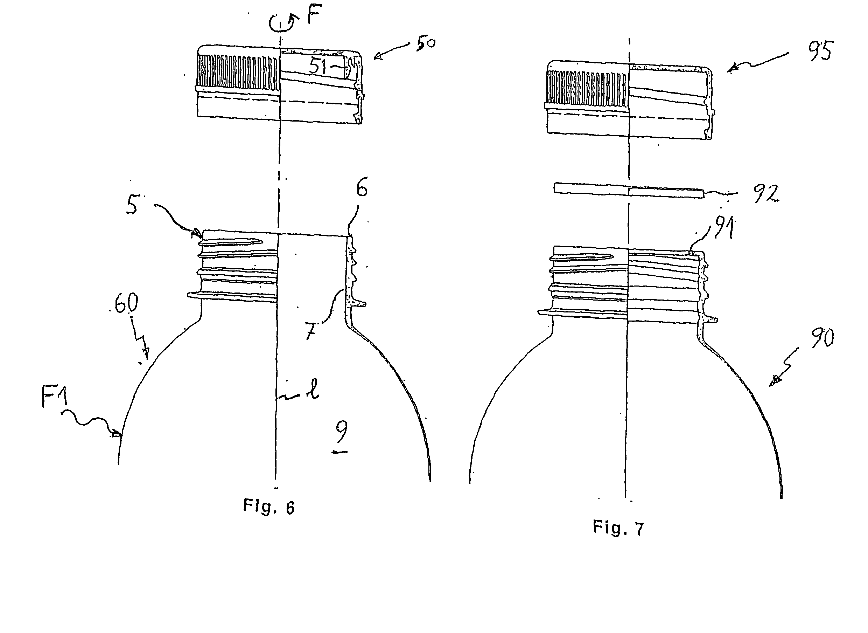

Fig. 3 shows the neck area 5 of a container 60 manufactured by stretch blow moulding, in particular with PET as base material. The edge 6 of the neck 5 or spout is formed by its free end and lies in the extension of the internal profile 7 of the neck that shows an essentially straight shape, which is visible in fig. 6. A continuous profile of the neck is thus obtained thus promoting a very smooth pour out of the drink contained in the bottle or any content.

As opposed to it, fig. 4 shows the neck obtained for bottles 90 manufactured from an extruded plastic based material, such as in particular polyethylene, which needs a sealing 91 at the spout edge of the bottle. Said sealing 91 serves as a supporting surface for sealing element 92, such as an aluminium foil to be removed according to arrow A for example as can be seen in fig. 5.

With injection moulded bottles 60, 70, 80, the cap 50 is simply removed according arrow F so that the bottle is then ready for use and can thus be emptied, according to an amount which is almost arbitrary, while not significantly affecting the remaining drink in the bottle. The absence of sealing problems is due to the presence of a sealing lip 51 directly built in the cap 50 which is made visible in fig. 6.

For extruded bottles on the contrary, the sealing function is ensured by the cooperation of the sealing foil 92 with the recess 91 of the extruded neck, as shown in Fig. 7. The result thereof is that with the known extruded bottles 90, especially from polyethylene, after removal of the sealing element 92, the bottle actually must be emptied since after the removal of such a sealing foil, there is no more sealing available so that any product remainder in the bottle can be easily altered. As shown in Fig. 7, the extruded cap 95 has no own sealing element. A further drawback of the extruded bottle is that it cannot be emptied as smoothly as with an injection moulded sprouted bottle, precisely since of the presence of said recess that retains a residual amount of fluid in a corner 98 formed between the indentation and the adjacent neck.

From the foregoing it is thus clear that the use of PET bottles as injection moulded sprouted containers, is more hygienic, especially for easily alternatable or unstable products such as milk for example.

In order to replace the polyethylene bottle for milk according to the foregoing, a PET polycarbonate blend is advantageously used, e.g. at approximately 10%. This enables the PET bottle to be cleaned with a higher contact temperature of 75°C to 85°C by using peroxide gas of e.g. at least 120°C with the aim to satisfy the requirement of the so-called "log" bacteria reduction level. Benefits are that the filling companies may continue to use their existing infrastructure, even when using PET, without problems of seal at the pouring aperture or of cutting the bottom, nor of formability, storage or shine aspect, since it may be worked directly in line. The condition for this is that the PET container has a maximum shrinkage of up to max 5% or even less to 3,5 to 4%, and that the closing caps 50 can be made aseptically. Up to 1% will be preferred.

The thermal properties that are applicable are set out in more detail below and submitted to experimentation.

### Tests

Shrinkage tests were carried out on single layer bottles with the PET polycarbonate blend of 10% which produces shrinkage of 6 to 7%, whereas the PET polypropylene blend of 10% generates shrinkage of about 11%. The aim is to obtain a maximum shrinkage of 3 to 4% or even 1%, with a water temperature of 86 °C, compared with the usual 17 to 20% for ordinary standard PET.

The test method used here can be described as follows. Bottles were cold filled up to the edge, and volume was recorded. The filling was made with water at different temperatures of 75°C, then 80°C and finally 85°C.

Then the bottles were left during a time gap of about 5 minutes, after which the bottles were emptied, after which they were cooled down.

Then again, the same bottles were cold filled up to the edge and volume was noted. That test was repeated for several bottle materials, which is shown in the following table. Thus, standard basis material such as PET and so-called standard "hot fill" material were successively tested.

A blend of 90% PET with 10% PEN was tested as well.

Further the 10% blend of polypropylene with standard material was tested, and so was PETN05.

Finally, PET as standard material was mixed with 10% polycarbonate.

The measurements in the lab yielded shrinkage expressed in% at various temperatures above. The results were summarized in the following table.

| | 75°C | 80°C | 85°C |
|---|---|---|---|
| Standard PET | -3,5 % | - 7,3 % | -17% |
| Standard Hotfill material | | -5,8 % | |
| 90% Standard PET + 10% PEN | -2,8 % | -3,8 % | -6,9 % |
| 90% Standard PET + 10% PP | -2,9 % | | -11,4% |
| 90% Standard PET + 10% PETN05 | | - 3,9 % | - 3,3 % |
| 90% Standard PET + 10% PC | - 4,1 % | | |

The shrinkage of the bottle is measured by the measurement of differences in water filling before and after experimental warming of the test bottles.

It can be deducted from the table above that the respectively measured shrinkage is comprised between 2,8 and 4,1% for a measured temperature of 75°C.

When the measured temperature is 80°C, the shrinkage varies between 3,8 and 7,3%. However, if the measured temperature is 85°C, the shrinkage varies between 3,3 and 17%.

This table thus shows that the least shrinkage occurs with a measured temperature of 75°C, which was to be expected. Also, the largest variations occur at 85°C.

Among the various materials tested, the smallest shrinkage was observed in the case of the blend of 90% PET with 10% PEN where the shrinkage was only 2,8% with an operating temperature of 75°C. A shrinkage of almost the same order of magnitude of 2,9% could be measured when the standard PET material was mixed with the same % of polypropylene, that is 10%. Both blends show however a different behaviour at higher operating temperatures. At 85°C it could be found that the shrinkage rose to 6,9% in the first case and was significantly higher, up to 11,4% shrinkage in the second case.

In contrast, whereas at higher operating temperatures, such as 85°C, the shrinkage rate was essentially analogous between the aforementioned blend of 90% PET with 10% PEN and standard basis material mixed with 10% polycarbonate with shrinkage rates respectively of 6,9 and 7,0%. In that case however, both values diverge again at lower operating temperature of 75°C where the shrinkage rates were respectively 2,8% and 4,1%.

The smallest shrinkage rate at the highest probe temperature of 85°C could be measured with the PETN05 material since the shrinkage rate in that case was barely 3,3%. The remarkable thing in this material is that this is the only tested material that showed a shrinkage rate that decreased with the increasing operating temperature.

Apart from the cost aspect, the choice of the bottle material will therefore depend on the desired application, in particular on the operating temperature to be used. At low values, for example 75°C, the preference will be given according to the tests to the 90% PET / 10% PEN blend; and possibly to the standard material with 10% polypropylene blend which is also the preferred additive to get the light protection.

At higher operating temperatures, in this case 85°C, the preference will be given to PETN05.

However, when a satisfactory shrinkage rate is desired with all specified probe temperatures, said 90% PET / 10% PEN blend is the material with the best shrinkage rate considering the average.

Further perspectives for this invention are for example additional blends with other materials or better nucleators or germ generators.

In a preferred embodiment, the blend intended to increase thermal properties is also used to generate opacity.

The primary base layer may have an opaque whitish appearance so that incident radiation, in particular light, is to a large extent reflected when impinging the wall. The external layer 1 is thus an effective light barrier, whose light blocking effect may be further strengthened by the intermediate layer 2.

The intermediate layer 2 may be coloured so that the radiations might pass through the outer layer 1 of the wall at least partially absorbed by the intermediate layer 2, which thus serves as downstream radiation filter with an impermeable function.

This embodiment is particularly useful for the blowing stage of the preform into a container and especially into a bottle for UHT milk. In this case, the intermediate layer 2 also acts as a gas barrier, in addition to excluding the light by absorbing it, whereby the oxygen penetrating from the outside is therefore also absorbed by it, in such a way that the milk is not altered by said outer oxygen particles. This gas barrier effect is therefore combined here with the light barrier action of the outside and inside layers 1 and 3.

More generally, a multi-layer structure has the advantage that undesirable external substances possibly penetrating through the outside layer 1 will be fully blocked just after by the intermediate layer 2, acting as an exclusion barrier, thereby providing an extra stop safety.

To optimize the structure, the intermediate layer 2 may be changed from black to grey with polypropylene or even preferably to white or to other colours that are supported on grey with polypropylene, in order to ensure the same maximum light exclusion.

The amount of additives 22 in the intermediate layer 2 can be increased to very high levels compared with the usual situations, since the intermediate layer, with e.g. only about 10% of the total thickness of the preform, does not affect the mechanical features of the container and so it does not influence either the blow moulding of the preforms, or the co-injection thereof. These features mainly come from the inside layer 3 and the outside layer 1, which totalize about 90% of the three-layer structure 10.

Furthermore, a plurality of other colouring additives and colorants can be incorporated in the intermediate layer 2 more easily than in the customary situations with PET, since one can use lower injection temperatures for the intermediate layer than for the outside layer 1 and the inside layer 3. This opens up a very wide range of possibilities for the incorporation of other and/or more additives, particularly in the intermediate layer, which was not possible with preforms having a single-layer structure.

With a paler colour for the intermediate layer, a smaller amount of colouring additives is needed in the outside layer, which has a covering function, since a paler colour is easier to hide by a white outside layer. This has a quite favourable effect by reducing the cost and improving the ease of blowing the preform 10. It is therefore possible to use opaque preforms with a thick wall, which would not be possible otherwise under normal conditions.

In addition, the colour of the intermediate layer 2 and the colour of the outside layer 1 can be blended and adjusted to each other if the required colour of the outside surface is not white, such as blue, red, gold, yellow or orange, etc. Such situations can mainly arise from the marketing requirements for the identification of said containers, in which PET is a good base material since it offers numerous possibilities in this respect, including a great variety of designs and shapes for the containers. The colour combination mentioned above can be utilized to the utmost by making the outside layer 1 transparent and yet coloured, thereby providing further options by using any possible colour combination required. This also improves the light barrier properties.

As to the white intermediate layer, an addition of product which is invisible to the eye is made, through which the light beam is partly absorbed. Benefits of this is that with a lower pigmentation, a much larger light absorption can be reached, until less than 1% reaching the intermediate layer. Thanks to the white intermediate layer, the outer layer can have many colours for example red, yellow, e.g. Thanks to the lower pigmentation, the opaque PET bottle is cheaper and lighter, and there is no longer a loss to blow capacity.

The following examples illustrate the further improvements in the barrier properties of the container wall, not only for light but also for oxygen. An additionally improved oxygen barrier that goes beyond the standard PET can be incorporated for the packaging of oxygen-sensitive dairy products that contain basic nutrients such as vitamins, proteins, carbohydrates, starches, essential fatty acids, etc. This can be achieved by incorporating in the intermediate layer 2 materials with improved barrier properties, such as aromatic or aiiphatic barrier plastics, nyion and aromatic polyesters such as for example:
- polyethylene 2,6-naphthalate (PEN)
- polyethylene terephthalate ionomer (PETI)
- polyethyleneimine (PEI)
- polytrimethylene naphthalene 2,6-dicarboxylate (PTN) and
- polyethylene terephthalate - polyethylene naphthalate copolymer (PETN).

Alternatively, the same aim can also be achieved by adding an oxygen scavenger, such as an oxidizable polyester or an oxidizable nylon.

This may further best be achieved by incorporating both a material with improved barrier properties and an oxygen scavenger, so that the inside of the container is protected not only from light but also from oxygen.

In this way, the incorporation of polymeric additives in the PET base material in combination with the additional use of colour additives in multi-layer but also in single-layer structures can give rise to a great variety of combined colour effects that not only ensure the technically desirable light barrier properties but also offer visual advantages facilitating the identification of the product.

Besides, a single-layer structure 20 is satisfactory for some applications in the dairy, especially for products derived from milk, where the degrading action of oxygen is less critical. Said single-layer structure is shown in Fig 2. Any colour can be used in these applications, and a single-layer milk bottle can be made by the addition of the required coloured pigments and colouring materials.

Fig. 8 shows a container of the bottle type 70 obtained by stretching and blowing a preform of the type shown in Figs. 1 and 2. The outer wall 71 has a special appearance 72 indicated here by light stippling. This remarkable effect is caused by a nacreous appearance 72 that the bottle 70 presents to the consumer, making it not only particularly attractive but also easier to recognize. The nacreous effect is enhanced by the biaxial stretching of the preform, i.e. its stretching both in the radial and in the longitudinal directions, and by the blowing of the preform to form the container. This nacreous effect is achieved from the delamination occurring in the blend of mutually immiscible primary base material and polymeric additives, wherein their immiscibility is in turn due to their mutual incompatibility. It is therefore the choice in full awareness of incompatible materials as constituents of the plastic working blend which creates this surprising nacreous effect.

This nacreous effect 72 is not only an advantage in the presentation of the product but also serves a technical purpose by making the resulting outer surface 71 quite reflective. The resulting surface therefore already has one of the three fundamental properties characterising a light barrier, which are low transmittivity, high absorptivity and high reflectivity.

What is remarkable here is that this nacreous effect 72 produces a white gloss if a special polymer is chosen and blended with PET. Satisfactory barrier properties may be obtained even without the addition of any colouring matter, notably a white one. The whitish pale nacreous appearance 72 can therefore be obtained by stretching the plastic only, yet without the use of any colouring matter though.

The barrier properties can yet be further enhanced by the addition of a small amount of colorants, typically about merely 2-4 wt-%, or about 5-8 wt-%, according to whether the container has a multi-layer structure or a single-layer one. This is a considerable advantage from the technical point of view, since the addition of colorants causes problems when a preform is being blown into a bottle. The more pigment it contains the more difficult is the blowing process. The critical value set above at 8% for coloured pigments is a threshold value beyond which the blowing of preforms into bottles becomes considerably difficult.

It has been shown experimentally that the wall 71 can reflect up to 92% of incident light even without the use of colorants, but by incorporating polymeric additives alone, which is more than sufficient for a wide range of applications, such as sleeve bottles, where the printed sleeve can be drawn with virtually any pattern on such a container.

An additional advantage lies in the easier blowing of the preform to a container, owing to the possible absence of coloured pigments, which make blowing only difficult. Furthermore, the mechanical properties of the material are not diminished here as they inevitably are when colorants are added. In addition, the thermal stability of the preform is better, so the latter remains stable at considerably higher temperatures.

In addition, the absence or at least greatly reduced presence of pigments, which are relatively heavier than polymeric additives, results in that the container formed is very light, with a reduction up to 20 wt-% lighter, while retaining a reflective index of more than 92, together with the possibility of using the customary blowing equipments.

However, an improvement in the light barrier properties for a multi-layer structure in comparison with a single-layer one cannot be expected if no colorants are incorporated in it. So the use of a multi-layer structure is useful mainly if colorants are present.

The opacity of the outer layer 71 is obtained by the addition of a thermoplastic polymer additive amounting to 1 % by weight in the PET.

Alternatively, said thermoplastic polymer additive is formed by polypropylene / carbonate. It can be blended with the PET at the rate of 1 to 10% by weight, preferably from 5 to 8% by weight.

Further thermoplastic polymeric additives are formed by polyethylene additives, in particular so-called high-density polyethylene known as HDPE, low-density polyethylene (LDPE), medium density polyethylene (MDPE) and linear low density polyethylene (LLDPE). Further to be considered are polyolefin acetate co-polymers, such as methyl (EMA), ethyl (EEA), vinyl (EVA) acetate, polyethylene co-polymers of vinyl alcohol (EVOH), Polystyrene (PS), polyvinylchloride (PVC), polyethylene-terephthalate (PET), polyethylene-isophthalate (PEI), polybutylene-terephthatate (PBT), polyethylenenaphthalate (PEN), polytrimethylene-naphthalate (PTN), polytrimethylene- isophthalate (PTI), polytrimethylene-terephthalate (PTT), phthalic acid copolymers, polycarbonate (PC), acrylonitrile butadiene styrene (ABS), polyamide 6 (PA6), polyamide 66 (PA 6,6).

Fig. 9 shows a variant of the bottle 80, where the darker shaded zones 81 indicate a metallized appearance 82 of the container.

Said nacreous effect 72, resp. metallized effect 82, which are due to the addition of a polymeric additive to the primary base plastic, have the intrinsic advantage for light-sensitive products, such as UHT milk, that the surface 71 or 81 of the container 70 and 80 containing the milk reflects a substantial proportion of the incident light in a natural way. In addition, the wall of the container has a great level of internal refraction. These two phenomena mutually combine to reduce or even prevent the penetration of light.

There is an effect of light blockage through the adding of polypropylene additives to the PET as a primarily plastic material without adding colour additives or substances. A high reflectivity is caused by the nacreous aspect of the wall of the container after the subsequent stretch blow moulding of the original PET / PP preform.

Multilayer structures have an addition of 10% polypropylene additives, and further an addition of colorants at the rate of 2% white in the outer layer 1 and 2% black in the intermediate layer 2. As to the transmission, the effect is produced by the inclusion of a coloured layer as intermediate layer which provides a light blockage effect. There is a reflective effect at the nacreous outer wall, just as in the case of the single layer structure and the internal refraction of light.

It is particularly worth noting that the multi-layer structure of the container according to the invention can also be used with an intermediate layer 2 that is similarly white instead of being black. The replacement of the latter by the former according to the invention is possible here thanks to said synergistic effect of the polypropylene-type polymeric additives and colouring additives, ensuring an additional intrinsic light-blocking effect for enabling the achievement of this blocking mode of the intermediate layer 2 without the need of a black intermediate layer with its typical light-absorbing function. This also has the outstanding advantage that owing to the invention, the black intermediate layer no longer needs to be covered by a white outer layer as in the conventional types of preform. Achieving this quite remarkable effect is only possible by subjecting the initial preform, i.e. the semi-finished product, to biaxial stretching in order to obtain the container as the finished product. It is therefore possible to achieve the absorption of the radiation without any pigmentation, i.e. without the addition of colouring additives that are needed for obtaining an absorbing black intermediate layer, but not for a white light-blocking intermediate layer. A similar effect may be obtained without adding colouring additives or pigments, yet by subjecting the initial preform to biaxial stretching in order to form the container. Owing to this method of biaxial stretching, a crystalline structure is achieved in the polyethylene terephthalate, as a result of which the biaxially stretched container becomes white.

It is possible to produce a coloured container, like a bottle with three layers or more generally a multi-layer structure, by adding a relatively small percentage of colorants or pigments with a suitable incorporation of polymeric additives according to the invention, a sampie of which is shown in fig. 10.

It is rather difficult to load PET. Indeed, incorporating additives like pigments and colorants in PET is relatively difficult since the processing temperature used here is high, i.e. from 250 to 300°C, which is undesirable for pigments and colorants. In addition, the pigmentation of PET is much more expensive than that of other plastics. In this respect, there are pigments allowing higher levels of charges, such as e.g. HCA^{®} used in some tests. The same light exclusion effect can therefore be obtained here but at a lower cost. However, a multi-layer structure must be used to reduce the transmission to an absolute minimum, i.e. practically to zero. Owing to the invention, light radiation is absorbed instead of being refracted, and this is achieved merely by using polymeric additives, i.e. with very small pigment or colorant charges or even none at all.

Further tests were carried out with the white intermediate layer, thanks to which the outer layer can have any colour without blowing problem, for example, since the light is reflected on white while the heat goes through with black.

A further embodiment of the preform contains a certain amount of fragmented metal in the mentioned blend, particularly as a powder, preferably with a particularly small grain size with high dispersal ability so that a homogeneous distribution of this material is achieved, more preferably to a level of almost 2%, preferably not more than 1%. A useful advantage thereof is that the visibility of containers can be significantly increased thanks to the presence of the metal. This will facilitate the sorting of containers for recycling. In addition, containers can be codified.

Also, a particularly remarkable mirror effect on the interior side of the container wall can thus be obtained. The range of applications of containers with light barrier can thus be further extended to toothpaste tubes for cosmetics and others, or even for flowing food, such as mayonnaise or ketchup with a semi-rigid container wall, in addition to the containers with stiff wall.

The preform may contain a certain amount of ferrous metals, especially stainless steel, of with magnetic effect, which can be used for recycling. Alternatively the preform contains a certain amount of non-ferrous metals in the abovementioned blend.

Remarkably, the surface aspect of the PET containers can be transformed from a nacreous aspect to a metallized aspect, in particular a silvery metallized aspect, by an appropriate addition of additives, at the stage of blowing of the preform to containers. It can be stated that the metallized surface appearance is due to an additional incompatibility of both polymers produced by the cold stretching, which produces an additional whitening of the nacreous aspect so that the nacreous aspect disappears and softens, which provides a reflective metallic view to the manufactured product.

Measurements carried out on single-layer bottles indicated that the transmitted light is reduced to only 5%, which is an excellent result compared with PET, which is not completed with polypropylene additive and without white colourants, as set out hereafter.

If the container is only made out of the primary plastic PET, one could observe that up to about 90% of the light is transmitted.

Further, 2% additives are added to the primary raw material in the form of polypropylene. It could be observed that a relatively moderate polypropylene addition produces a significant reduction of the light getting through. Further the addition of polypropylene to 5% further reduces the light getting through the container wall to 15%.

With the addition of the same amount of polypropylene additives of 5% for a total value of 10% PP, it could be observed that the light transmission is limited to barely 5%. So it is surprising that the light getting through does not decrease linearly with the addition of polypropylene additives, but instead decreasing relatively quickly. For example, it could be determined when comparing two sets of measurements above, that five times more additives corresponds to ten times less light. The result is that the addition of polypropylene additives at a level of 10%, produces the rather strange result that the light transmission falls by 95%.

A further set of tests is explained below. In this set of tests, there is always added 5% additives in the form of polypropylene in the primary raw PET, with a further addition of white colours to the level of 2% to 8%, respectively, with each an increase of 2%, and 4 respectively 6% white. This shows that the addition of 2% dyes reduces the passage of light rays to about 2%, while if the addition of colorants is doubled to 4%, the passage of light is halved to about 1%.

The tripling of colours to 6%, reduces the passage of light rays to about 0,3%.

The tests with the maximum adding of white to a level of 8% showed a little light passage reduced to approximately 0,15% of the incident light.

The above four test series showed that the addition of additional white colours by 2%, reduced the light passage from 15% to barely 2%. However, the addition of the white colours can reduce the light passage to a very low level of barely 0,15%.

On a similar way as in the previous series of tests could also be established that the decrease in light transmission is not a linear function of the addition of colorants, since a quadrupling of the colours from 2% to 8% brings about 13 times more barrier to light, which can be considered as a surprising result.

A further series of four tests is explained in more detail below. These tests were made in relatively similar conditions with doubling, however, of the percentage of additives in the form of polypropylene from 5% to 10%.

It could be observed that the addition of 2% dyes with a doubled adding of polypropylene additives to 10% just lets pass through approximately 1% of the incident light rays, i.e. half of the transmittance under similar conditions but with the addition of half polypropylene additives to 5%.

Analogue dye addition with each time additional 2 percent shows that with the first doubling of dyes to 4%, there is barely 0,4% light transmission. A tripling of the white dye addition to 6% shows that the light transmission even further halved to 0,2% of the incident light.

Finally, with a fourfold increase in white dye addition to 8%, the light transmission is reduced to barely 0,1% of the incident radiation.

A comparison of the test results within these additional measurements group shows once again that the decrease in light transmission is not linear with the increase of dyes, but shows a certain acceleration effect with reinforcing decline of the light towards the addition of dye additives. It can therefore be deducted from this latest series of measurements that provided a further addition of polypropylene as a polymer additive to 10%, the measurements are twice lower than in the previous series of measurements with half the polymer additives, namely 5% PP, also in the presence of white dye.

There is passage of the light reduced to about 1%, while with the addition of barely 5% polypropylene the light passage goes down to barely 0,15% of the incident light. Provided doubling of polypropylene to 10% the light passage is limited to about 0,1 %.

It could be observed that the addition of white colours without polymer additives can reduce light passage to 1%, at a wavelength of 550 nm, but not lower. Only the addition of the polymer additive polypropylene, can bring the measurements down to a level ranging up to 0,1%, which is extremely low. Lower levels of white colour addition with polymer additives show the same behaviour.

Only the transmitted light rays which extends through the container wall was measured, since only this amount of radiation is harmful for the product that is contained in the container. The results shown above should be further compared with the permissible transmission values in these sectors. Thus, we note that when the product contained is milk, the maximum permissible transmission value is 0,3%. This means in other words that for milk preforms taken strictly, addition of colorants are necessary, amounting 6% if 5% polymer additives are added. If, for example, 10% polymer additives are added, the amount of white colours could be reduced to a rate of between 4 and 6, for example approximately 5% for a white dye, as may be adopted by an extrapolation of the measurements. This is a significant result with the understanding that the preform blowing is harder as more colour additives are added. The difficulty of blowing is critical especially from 4% white dye adding and higher. There is hereby to note that the efficiency of the blowing machine may fall to 20% and more. Furthermore, there is also a limitation in the geometry of the preform due to the fact that the thickness of these will should be smaller than 4 mm, even up to 3,5 mm.

If we consider also the expense of the white colours such as Zinc oxide or titanium dioxide, the usefulness of a minimal addition of white colours will be directly understood. In this connection, it could be established that very favourable transmission results can be obtained even without the addition of colorants. The examples of applications show a maximum value of 0,7% transmission, which is not enough, as light filtering for certain species, especially UHT milk, where the maximum transmission is 0,3%.

By adding a halved white colour addition quantity for the type UHT for the same amount of polypropylene as polymer additives, that is 5%, a light transmission value of 2% was obtained. Furthermore it could be observed that the colours show a more efficient behaviour for light blockage in the presence of polypropylene as polymer additives. It can be said that the polymer additives produce a synergistic effect on the colour additives. Also, there was an increasing behaviour which could be observed from the measurements as a function of the wavelength, where it could be found that the smaller the wavelength of the incident radiation, the easier the incident radiation could be stopped by the container wall.

## Claims

1. Method for manufacturing a container, comprising the steps of making a blend (13, 23) of a plastic material (11) with additives (12) incorporated in it ; injection moulding of a preform (10, 20) comprising at least one layer made of said blend (13, 23) followed by blowing said preform into a container, wherein said additives (12) are made of a material having a higher glass temperature T_{g} than said plastic material (11), thus yielding an increased temperature value T_{g}, **characterised in that** it further comprises the steps of :
- adding a nucleator or grain former to said plastic material (11),
- forming a crystal herein and
- nuclearising said preform by said latter adding.

2. Method according to the preceding claim, **characterized in that** the plastic material (11) is injection moulded with addition of some percentage of additives (12) in said blend (13, 23), and **in that** said increased glass temperature value T_{g} is controlled, wherein the injected preform is blown into said container by blow moulding with said T_{g} value, wherein the refractive index of the plastic material (11) is so affected that incident radiation is practically not refracted when hitting or impinging its wall, wherein the internal wall (9) thereof is protected against external radiation, particularly electromagnetic radiation, particularly light.

3. Method according to one of the preceding claims, **characterised in that** the preform is heated up to a certain warming temperature, wherein a crystallization effect of the polymer is generated, consisting of an increased crystallization of said plastic material (11) through the action of the nucleator or grain former.

4. Method according to claim 3, **characterized in that** the warming temperature is set between 70 and 90°C, preferably between 75 and 85°C.

5. Method according to claim 3, **characterized in that** the warming temperature is increased to a target of at least 90°C, preferably up to 100°C.

6. Method according to one of both preceding claims, **characterized in that** the shrinkage value of said container is no more than 5%, preferably at most 3,5%, more preferably less than 1% when filled with water at a temperature of 86°C during five minutes.

7. Method according to one of the preceding claims, **characterized in that** said additives have a neutralizing action on external radiation and/or undesired gas formation, which originates from degradation of said product or liquids intended to fill said container to be produced from said preform, and/or on waste or degradation materials, which originate from said container itself, and/or on substances, and/or on reagents which have an adverse effect on a product to be contained, particularly wherein at least some of said additives are added consisting of dying substances.

8. Preform for container manufactured by a method according to one of the preceding claims, made of a blend (13, 23) of primary plastic material (11) with a certain amount of additives (12, 22) incorporated in it, **characterized in that** the amount of said additives (12) is between 1% and 20%, preferably between 5 and 15%, more preferably about 10 %, in weight and/or **in that** said plastic material (11) is formed of a biaxially stretchable material, preferably PET or polypropylene.

9. Preform according to the preceding claim, **characterized in that** said additives (12) are formed of polymer, in particular thermoplastic polymer, more particularly **in that** the additives (12) are comprised of polycarbonate, PEN, PETN05, polypropylene or PET, essentially or not, respectively.

10. Preform according to one of claims 8 or 9, **characterized in that** the preform (10) has a single layer structure.

11. Preform according to one of the claims 8 to 10, **characterized in that** the preform (10) has a multilayer structure, in particular a three layer structure, essentially composed of said primary plastic material (11) further comprising an intermediate core layer (2), acting as a barrier layer, in particular as light and/or oxygen barrier, which is composed of a secondary plastic material (21) for restricting residual transmitted light and/or oxygen.

12. Preform according to the preceding claim, **characterized in that** said intermediate layer (2) is white or coloured, wherein said intermediate layer (2) is composed of a blend of said secondary plastic material (21) with secondary additives (22) according to a predetermined ratio, in particular of 1 to 50%, preferably 15 to 35% by weight, thereby (2) representing not more than 10% of the total weight of the preform (20) ; wherein said secondary plastic material (21) is formed of a material that is biaxially stretchable, in particular PET, in particular wherein said additives (12, 22) have a neutralizing action on reagents with an adverse impact on the content, on the formation of gas originating from a degradation of said product or on external substances, especially oxygen and/or carbon dioxide, thereby forming an active or passive barrier in the preform wall, more particularly wherein a gas barrier is included in one of the layers, in particular in said intermediate layer (2), thereby consisting of a barrier material (23) with relevant gas absorption, wherein said intermediate layer (2) acts as a gas barrier.

13. Use of a container manufactured by a method according to any of the claims 1 to 7 or from a preform according to any of the claims 8 to 12, **characterized in that** said container contains products that are contaminable products in particular sensitive to radiation, more particularly light and/or oxygen sensitive nutrients such as food dairy products, more particularly milk.

## Patentansprüche

1. Verfahren zur Herstellung eines Behälters, umfassend die Schritte zur Herstellung einer Mischung (13, 23) aus einem Kunststoffmaterial (11) mit in ihm enthalten Additiven (12) in ihm enthalten; Spritzgießen einer Vorform (10, 20), umfassend mindestens eine Schicht aus der Mischung (13, 23), durch Blasen des Vorform in einen Behälter gefolgt, wobei die Zusatzstoffe (12) aus einem Material gemacht sind mit einer höheren Glastemperatur T_{g} als das Kunststoffmaterial (11), wodurch eine erhöhte Temperatur T_{g}-Wert erzeugt wird, **dadurch gekennzeichnet, dass** es ferner die folgenden Schritte umfasst:
- zu das Kunststoffmaterial (11) Hinzufügen eines Keimbildners oder Kornbildners,
- hierin Ausbilden einer Kristall und
- durch die obengenannte Zugabe Keimen der Vorform.

2. Verfahren nach dem vorhergehenden Anspruch, **dadurch gekennzeichnet, daß** das Kunststoffmaterial (11) unter Zusatz von einen gewissen Prozentsatz von Additiven (12) in der Mischung (13, 23) gespritzt wird, und daß die erhöhte Glastemperatur T_{g}-Wert gesteuert wird, wobei die gespritzte Vorform als Behälter durch Blasformen mit dem obengenannte T_{g}-Wert geblasen wird, wobei der Brechungsindex des Kunststoffmaterials (11) so beeinflusst wird, dass die einfallende Strahlung beim Schlagen oder Auftreffen ihrer Wand praktisch nicht gebrochen wird, wobei die innere Wand (9) davon gegen äußere Strahlung, insbesondere elektromagnetische Strahlung, insbesondere Licht, geschützt wird.

3. Verfahren nach einem der vorhergehenden Ansprüche, **dadurch gekennzeichnet, dass** die Vorform bis zu einer gewissen Erwärmungstemperatur erhitzt wird, bei der eine Kristallisationswirkung erhitzt des Polymer erzeugt wird, die aus einer erhöhten Kristallisation des Kunststoffmaterials (11) durch die Wirkung des Keimbildners oder Kornbildners besteht.

4. Verfahren nach Anspruch 3, **dadurch gekennzeichnet daß** die Erwärmungstemperatur zwischen 70 und 90°C, vorzugsweise zwischen 75 und 85°C eingestellt wird.

5. Verfahren nach Anspruch 3, **dadurch gekennzeichnet daß** die Erwärmungstemperatur um ein Ziel von mindestens 90°C, vorzugsweise bis 100°C erhöht wird.

6. Verfahren nach einem der beiden vorhergehenden Ansprüche, **dadurch gekennzeichnet, dass** die Schrumpfwert des Behälters nicht mehr als 5%, vorzugsweise höchstens 3,5%, mehr vorzugsweise weniger als 1% betragt, wenn sie bei einer Temperatur von 86°C während fünf Minuten mit Wasser gefüllt wird.

7. Verfahren nach einem der vorhergehenden Ansprüche, **dadurch gekennzeichnet, daß** die obengenannte Additive eine neutralisierende Einwirkung haben auf externe Strahlung und/oder auf unerwünschte aus dem Abbau des Produktes stammende Gasbildung, oder welche aus den zu füllen aus der Vorform hergestellte Behälter beabsichtigte Flüssigkeiten stammen, und/oder auf aus dem Behälter selbst stammende Abfall oder Abbaustoffen, und/oder auf Substanzen und/oder auf Reagenzien die auf ein zu enthalten Produkt eine nachteilige Wirkung aufweisen, insbesondere wobei zumindest einige der genannten aus farbgebenden Substanzen bestehende Additive zugegeben werden.

8. Vorform für Behälter nach einem Verfahren gemäß einem der gefertigten vorangehenden Ansprüche hergestellt, mit einer Mischung (13, 23) der primären Kunststoffmaterial (11) mit einer gewissen Menge an darin eingebaute Additiven (12, 22) gefertigt, **dadurch gekennzeichnet, daß** die Menge des Additive (12) zwischen 1% und 20%, vorzugsweise zwischen 5 und 15%, bevorzugter etwa 10% in Gewicht betragt und/oder daß das Kunststoffmaterial (11) aus einem biaxial dehnbaren Material, vorzugsweise PET oder Polypropylen, gebildet ist.

9. Vorform nach dem vorhergehenden Anspruch, **dadurch gekennzeichnet, dass** die Additive (12) aus Polymer, insbesondere thermoplastischen Polymeren gebildet sind, mehr insbesondere, daß die Zusatzstoffe (12) aus Polykarbonat, PEN, PETN05, Polypropylen oder PET, bzw. im wesentlichen oder nicht, bestehen.

10. Vorform nach einem der Ansprüche 8 oder 9, **dadurch gekennzeichnet, daß** der Vorform (10) eine Einzelschichtstruktur aufweist.

11. Vorform nach einem der Ansprüche 8 bis 10, **dadurch gekennzeichnet, daß** der Vorform (10) eine im wesentlichen aus der primären Kunststoffmaterial (11) zusammengesetzte Mehrschichtstruktur, insbesondere einer Dreischichtstruktur, besitzt, ferner eine als Sperrschicht, insbesondere als Licht und/oder Sauerstoffbarriere wirkende Zwischenkernschicht (2) umfaßt, die zur Beschränkung verbleibenden Durchlicht und/oder Sauerstoff aus eine sekundäre Kunststoffmaterial (21) zusammengesetzt ist.

12. Vorform nach dem vorhergehenden Anspruch, **dadurch gekennzeichnet, daß** die Zwischenschicht (2) weiß oder farbig ist, wobei die Zwischenschicht (2) aus einer Mischung des sekundären Kunststoffmaterials (21) mit sekundären Zusatzstoffe (22) entsprechend einem vorbestimmten Verhältnis zusammengesetzt ist, insbesondere von 1 bis 50%, vorzugsweise 15 bis 35%, wobei (2) es nicht mehr als 10% des Gesamtgewichts des Vorform (20) beträgt; wobei die Sekundärkunststoffmaterial (21) aus einem biaxial dehnbar Material ausgebildet ist, insbesondere PET, mehr insbesondere wobei die Zusatzstoffe (12, 22) eine neutralisierende Wirkung auf Reagenzien mit einer nachteiligen Auswirkung auf die Inhalt, auf die Bildung von aus eine Abbau des Produkts stammend Gas, oder auf externer Substanzen, insbesondere Sauerstoff und/oder Kohlendioxid, wodurch eine aktive oder passive Barriere in der Vorformwand gebildet wird, mehr insbesondere wobei eine Gasbarriere in einer der Schichten, insbesondere in dem Zwischenschicht (2) enthalten ist, wodurch die aus einem Barriere Material (23) mit entsprechenden Gasabsorption besteht, wobei die Zwischenschicht (2) als eine Gasbarriere handelt.

13. Verwendung eines Behälters nach einem Verfahren hergestellt gemäß einem der Ansprüche 1 bis 7 oder aus einer Vorform nach einem der Ansprüche 8 bis 12, **dadurch gekennzeichnet, daß** die Behälter Produkte enthält, die kontaminierbaren Produkte sind, insbesondere Strahlungsempfindlich, mehr insbesondere Licht und/oder Sauerstoff empfindlichen Nährstoffe, wie Lebensmittel Produkte bzw. Milcherzeugnisse, insbesondere Milch.

## Revendications

1. Procédé de fabrication d'un récipient, comprenant les étapes constituant à préparer un mélange (13, 23) d'un matériau plastique (11) avec des additifs (12) qui y sont incorporés; à mouler par injection une préforme (10, 20) comprenant au moins une couche faite dudit mélange (13, 23) suivie par le soufflage de ladite préforme en un récipient, dans lequel lesdits additifs (12) sont réalisés en un matériau ayant une température de transition vitreuse T_{g} plus élevée que ledit matériau plastique (11), en donnant ainsi lieu à une augmentation de la valeur de la température T_{g}, **caractérisé en ce qu'**il comprend en outre les étapes consistant à:
- ajouter un agent de nucléation ou de formation de graine à ladite matière plastique (11),
- y former un cristal et
- nucléariser ladite préforme par ce dernier ajout.

2. Procédé selon la revendication précédente, **caractérisé en ce que** la matière plastique (11) est moulée par injection avec addition d'un certain pourcentage d'additifs (12) dans ledit mélange (13, 23), et **en ce que** ledit accroissement de la valeur de la température de transition vitreuse T_{g} est réglé, dans lequel la préforme injectée est soufflée en récipient précité par moulage par soufflage à ladite valeur de T_{g}, dans lequel l'indice de réfraction de la matière plastique (11) est influencé de façon telle que le rayonnement incident n'est pratiquement pas réfracté lorsqu'il frappe ou heurte sa paroi, dans lequel la paroi interne (9) de celui-ci est protégée contre le rayonnement externe, en particulier le rayonnement électromagnétique, particulièrement la lumière.

3. Procédé selon l'une quelconque des revendications précédentes, **caractérisé en ce que** la préforme est chauffée jusqu'à une température de réchauffement déterminée, dans lequel un effet de cristallisation du polymère est produit, consistant en une augmentation de la cristallisation de ladite matière plastique (11) par l'action de nucléation ou de l'agent de formation de graine.

4. Procédé selon la revendication 3, **caractérisé en ce que** la température de réchauffement est réglée entre 70 et 90°C, de préférence entre 75 et 85°C.

5. Procédé selon la revendication 3, **caractérisé en ce que** la température de réchauffement est augmentée à une température cible d'au moins 90°C, de préférence jusqu'à 100°C.

6. Procédé selon l'une des deux revendications précédentes, **caractérisé en ce que** la valeur de contraction du récipient n'est pas supérieure à 5%, de préférence au plus 3,5%, de façon plus préférée inférieure à 1% lorsqu'il est rempli avec de l'eau à une température de 86°C pendant cinq minutes.

7. Procédé selon l'une quelconque des revendications précédentes, **caractérisé en ce que** les additifs ont une action neutralisante sur le rayonnement externe et/ou sur la formation non désirée de gaz, qui provient de la dégradation dudit produit ou de liquides destinés à remplir ledit récipient à produire à partir de ladite préforme, et/ou sur des déchets ou des matériaux dégradés, qui proviennent dudit récipient lui-même, et/ou sur des substances, et/ou sur les réactifs qui ont un effet négatif sur un produit devant être contenu, en particulier dans lequel au moins une partie desdits additifs constitués de substances colorantes sont ajoutés.

8. Préforme pour récipient produite par un procédé selon l'une quelconque des revendications précédentes, réalisée par un mélange (13, 23) de matière plastique primaire (11) avec une certaine quantité d'additifs (12, 22) qui y sont incorporés, **caractérisée en ce que** la quantité desdits additifs (12) est comprise entre 1% et 20%, de préférence entre 5 et 15%, de préférence encore 10% en poids et/ou **en ce que** ladite matière plastique (11) est formée d'un matériau étirable de manière biaxiale, de préférence en PET ou en polypropylène.

9. Préforme selon la revendication précédente, **caractérisée en ce que** lesdits additifs (12) sont formés d'un polymère, en particulier un polymère thermoplastique, plus particulièrement **en ce que** les additifs (12) sont constitués de polycarbonate, de PEN, de PETN05, de polypropylène ou de PET, principalement ou non, respectivement.

10. Préforme selon l'une des revendications 8 ou 9, **caractérisée en ce que** la préforme (10) possède une structure à une seule couche.

11. Préforme selon l'une quelconque des revendications 8 à 10, **caractérisée en ce que** la préforme (10) possède une structure multicouche, en particulier une structure à trois couches, constituée essentiellement de ladite matière plastique primaire (11) comprenant en outre une couche centrale intermédiaire (2), agissant comme une couche barrière, en particulier comme une barrière à la lumière et/ou à l'oxygène, qui est composée d'un matériau en matière plastique secondaire (21) pour limiter la lumière et/ou l'oxygène résiduel transmis.

12. Préforme selon la revendication précédente, **caractérisée en ce que** ladite couche intermédiaire (2) est blanche ou colorée, dans laquelle ladite couche intermédiaire (2) est composée d'un mélange de ladite matière plastique secondaire (21) avec des additifs secondaires (22) selon un rapport prédéterminé, en particulier de 1 à 50%, de préférence de 15 à 35% en poids, de façon (2) à ne pas représenter plus de 10% du poids total de la préforme (20); dans laquelle ladite matière plastique secondaire (21) est formée d'une matière qui est étirable biaxialement, en particulier en PET, en particulier dans laquelle lesdits additifs (12, 22) ont une action neutralisante sur les réactifs ayant un impact négatif sur le contenu, sur la formation de gaz provenant d'une dégradation dudit produit ou sur des substances externes, en particulier l'oxygène et/ou le dioxyde de carbone, de manière à former une barrière active ou passive dans la paroi de la préforme, plus particulièrement dans laquelle une barrière contre les gaz est présente dans l'une des couches, en particulier dans ladite couche intermédiaire (2), constituant ainsi un matériau de barrière (23) avec une absorption du gaz significative, dans laquelle ladite couche intermédiaire (2) agit comme une barrière aux gaz.

13. Utilisation d'un récipient produit par un procédé selon l'une quelconque des revendications 1 à 7 ou à partir d'une préforme selon l'une quelconque des revendications 8 à 12, **caractérisée en ce que** ledit récipient contient des produits qui sont des produits contaminables en particulier sensibles aux rayonnements, plus particulièrement des nutriments sensibles à la lumière et/ou à l'oxygène tels que les produits alimentaires laitiers, plus particulièrement le lait.
